# EUROPEAN PATENT SPECIFICATION

(11) **EP 1 562 338 B1**
(45) Date of publication and mention of the grant of the patent: **17.10.2007**
(21) Application number: 03727130.1
(22) Date of filing: 14.05.2003
(51) Int. Cl.: H04L 12/58, H04L 12/14

(54) **METHOD FOR FORWARDING MESSAGE BETWEEN THE DIFFERENT MULTIMEDIA MESSAGE CENTERS**
VERFAHREN ZUM WEITERLEITEN EINER NACHRICHT ZWISCHEN VERSCHIEDENEN MMSC (MULTIMEDIA MESSAGING SERVICE CENTER)
PROCEDE DE RETRANSMISSION DE MESSAGES ENTRE DIFFEFENTS CENTRES DE MESSAGES MULTIMEDIA

(30) Priority: 12.11.2002 CN 02149289
(43) Date of publication of application: 10.08.2005
(73) Proprietor: Huawei Technologies Co., Ltd., Nanshan District, Shenzhen 518057 (CN)
(72) Inventor: TANG, Fei Huawei Service Centre Building, Guangdong 518057 (CN); LI, Xiaobin Huawei Service Centre Building, Shenzhen Guangdong 518057 (CN); LIU, Minghai Huawei Service Centre Building, Guangdong 518057 (CN); ZHANG, Bo Huawei Service Centre Building, Guangdong 518057 (CN); MENG, Yong Huawei Service Centre Building, Guangdong 518057 (CN); YANG, Weishu Huawei Service Centre Building, Guangdong 518057 (CN)
(74) Representative: Körber, Martin Hans
(86) International application number: PCT/CN2003/000350
(87) International publication number: WO 2004/045170

(56) References cited:
- EP-A- 1 255 416
- CN-A- 1 272 737
- "Universal Mobile Telecommunications System (UMTS); Telecommunication management; Charging management; Charging data description for application services (3GPP TS 32.235 version 5.0.0 Release 5); ETSI TS 132 235" ETSI STANDARDS, EUROPEAN TELECOMMUNICATIONS STANDARDS INSTITUTE, SOPHIA-ANTIPO, FR, vol. 3-SA5, no. V500, September 2002 (2002-09), XP014009960 ISSN: 0000-0001
- ERISCSSON: "T2-0300060" 3GPP TSG-T2 #20 CHANGE REQUEST, [Online] 14 January 2003 (2003-01-14), pages 1-7, XP002392554 San Francisco Retrieved from the Internet: URL:http://www.3gpp.org/ftp/tsg_t/WG2_Capa bility/TSGT2_20_SanFrancisco/Docs/T2-03006 0.zip> [retrieved on 2006-07-28]
- "Digital cellular telecommunications system (Phase 2+); Universal Mobile Telecommunications System (UMTS); Multimedia Messaging Service (MMS); Functional description; Stage 2 (3GPP TS 23.140 version 5.4.0 Release 5); ETSI TS 123 140" ETSI STANDARDS, EUROPEAN TELECOMMUNICATIONS STANDARDS INSTITUTE, SOPHIA-ANTIPO, FR, vol. 3-T2, no. V540, September 2002 (2002-09), XP014007802 ISSN: 0000-0001

## Description

### Field of the Technology

The invention relates to message forwarding technique, particularly to a method for forwarding multimedia messages between different Multimedia Messaging Service Centers (MMSCs).

### Background of the Invention

In the time of the second-generation (2G) mobile communication, development of data service is limited because network bandwidth and the intrinsic disadvantages of Short Message Service (SMS) are difficult to overcome. As the development of the third-generation (3G) mobile communication system, various data services based on it have been developing rapidly and have a wider field than that based on the 2G mobile communication system.

Multimedia technology makes it possible for people to represent and transmit messages more accurately and emotionally. The 3G mobile communication system introduces multimedia technology into the mobile communication field. A new message service, Multimedia Message Service (MMS), will change the short message communication modes fundamentally. The MMS provides a non-real-time multimedia communication mode, and a user can send or receive a multimedia message consisting of texts, images, videos and audios. Based on this platform, richer services can be derived and better service quality can be provided.

A MMSC is responsible to send messages consisting of pure texts, pictures, videos, audios and other media over a network. The MMSC can provide three basic service capabilities: a point-to-point service capability, a point to application service capacity and an application to point service capacity, and also two extended service capacities: a point to multipoint service capacity and an application to multipoint service capacity.

MMSC is located on IP network, and connected to a wireless network through a Wireless Application Protocol (WAP) gateway. Implementation of MMSC is independent on the specific wireless networks. MMSC can support multiple networks such as GSM, GPRS, WCDMA, CDMA, CDMA2000 and the 3G networks in future.

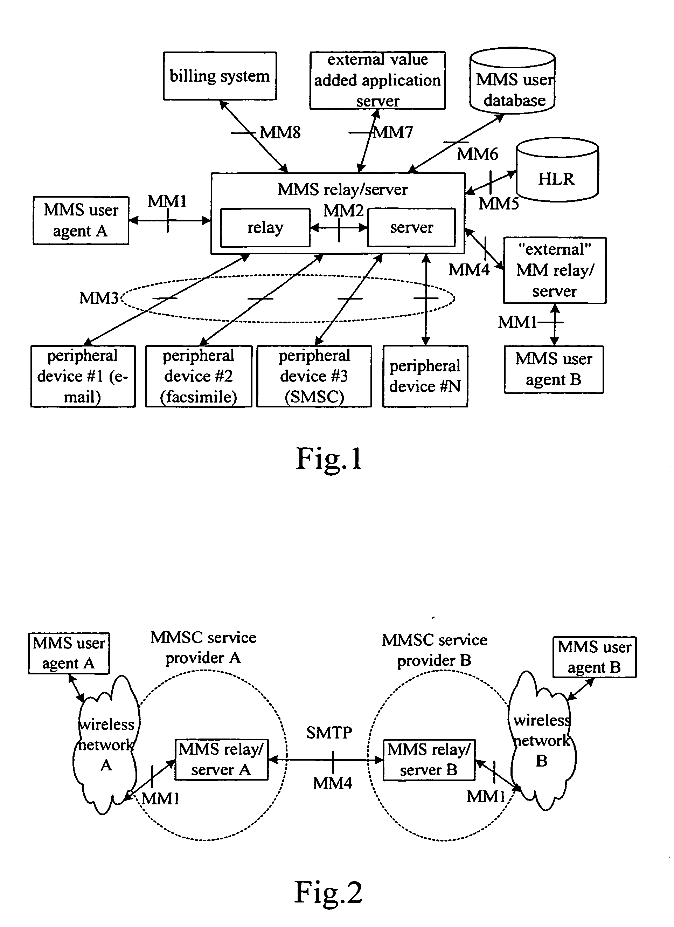

The system structure of a MMSC is illustrated in Fig.1, and the related system interfaces are determined by each network element. The definition and description of interfaces are concentrated on the standard procedure of service access. At the same time, a lowest requirement for the specification of the system physical interfaces is defined to ensure the variety of the system.

Fig.1 illustrates the system structure of MMSC according to the prior art. The MMS terminal shown in Fig. 1 provides multimedia message services through a MMS user agent. The MMS user agent, which provides functions for user to browse, edit and process a multimedia message and operations for user to send, receive and delete a message, is an application in a MMS terminal, and is connected to the MMSC through the reference point MM1. A MMSC makes protocol transforming, content adapting, storing and dispatching for multimedia messages, performs multimedia message transferring between different multimedia devices, and also produces a Charging Detail Record (CDR) for charging. A MMS user database which stores user information, personalized information and interface information etc. is connected to the MMSC through the reference point MM6. In a target network, the MMS user database is a part of MISC system and is integrated in the MMSC at present. A MMS value added service application for providing value added services is connected to the MMSC through the reference point MM7. A billing system for performing the charging operation of MMSC is connected to the MMSC through the reference point MM8. Peripheral devices, such as an email server, a short message service center (SMSC) and a facsimile etc, are connected to the MMSC through the reference point MM3 and provide external services.

As shown in Fig.2, the reference point MM4 is an interface of different MMSCs and is used for transferring messages between different MMSCs through a Simple Mail Transfer Protocol (SMTP). The message transferring protocols needing to be satisfied when transferring multimedia messages over interface MM4 are mainly the protocols of the Third Generation Partnership Project (3GPP).

There are three cases for messages forwarding between different MMSCs.

### 1. Routing forwarding of a multimedia message

After having successfully discovered a certain peer MMSC, the originator MMSC should forward a multimedia message to the recipient MMSC using the routing forward request message MM4_forward.REQ including control information of MMS and content of the MM. Correspondingly, the recipient MMSC should response with a routing forward response message MM4_forward.RES including the status requested in the MM4_forward.RES. The definitions of the two messages concerning about the routing forwarding procedure are shown in Table 1.

**Table 1**

| Name of abstract message | Message type | Direction |
|---|---|---|
| MM4_forward.REQ | Request | Originator MMSC-> recipient MMSC |
| MM4_forward.RES | Response | Recipient MMSC->originator MMSC |

Here, information elements of the MM4_forward.REQ used in recipient MMSC when forwarding multimedia messages between different MMSCs are shown in Table 2.

**Table 2**

| Information element | Presence | Description |
|---|---|---|
| 3GPP MMS Version | Mandatory | The MMS version of the originator MMS Relay/Server as defined by the present document. |
| Message Type | Mandatory | The type of message used on reference point MM4: "MM4_forward.REQ". |
| Transaction ID | Mandatory | The identification of the MM4_forward.REQ/ MM4_forward.RES pair. |
| Message ID | Mandatory | The identification of the MM. |
| Recipient address | Mandatory | The address(es) of the MM recipient(s). Multiple addresses are possible. |
| Originator address | Mandatory | The address of the last MMS User Agent that has handled, i.e. submitted or forwarded, the MM. If the originator MMS User Agent has requested its address to be hidden from the recipient, its address shall not be provided to the recipient. |
| Content type | Mandatory | The type of the content of MM. |
| Message class | Conditional | The class of the MM, e.g. personal, advertisement or information service under the condition that the originator MMS User Agent has been specified. |
| Date and time | Mandatory | The last time and date when the MMS User Agent handled, i.e. submitted or forwarded, the MM. |
| Time of expiry | Conditional | The pre-specified time of expiry for the MM. It is specified by the originator MMS User Agent. |
| Delivery report | Conditional | A request for delivery report if the originator MMS User Agent has requested a delivery report for the MM. |
| Priority | Conditional | The priority (importance) of the message if specified by the originator MMS User Agent. |
| Sender visibility | Conditional | A request to show or hide the sender's identity when delivering message to the MM recipient if the originator MMS User Agent has requested the recipient for hiding its address. |
| Read reply | Conditional | A request to read reply report if the originator MMS User Agent has requested a read-reply report for the MM. |
| Subject | Conditional | The title of the whole MM if specified by the originator MMS User Agent. |
| Acknowledgement Request | Optional | A request for MM4_forward.RES |
| Forward-counter | Conditional | A counter indicating the number of forwarding times of a certain MM. |
| Previously-sent-by | Optional | In case of forwarding, the information element contains one address or more addresses of MMS User Agent(s) that handled, i.e. forwarded or submitted, the MM prior to the MMS User Agent whose address is contained in the sender address information element. The order of the addresses provided should be marked. If present, the address of the originator MMS User Agent should be marked. |
| Previously-sent-date-and-time | Optional | The date and time associated with submission and forwarding event(s) prior to the last handling of the MM by a MMS User Agent. |
| Content | Conditional | The unaltered content of the multimedia message if specified by the originator MMS User Agent. |

### 2. Routing forwarding delivery report

Having delivered the MM, the recipient MMSC generates a routing forward delivery report request MM4_delivery_report.REQ containing only control information of MMS according to the current delivery status and sends it to the originator MMSC. Having received a delivery report from the recipient MMSC, the originator MMSC responses a delivery report response message MM4_delivery_report.RES providing status information of the condition requested by the MM4_delivery-report.REQ.

It is necessary for MMSC to support the MM4_delivery-report.REQ. The definitions of two messages of delivery report are shown in Table 3.

**Table 3**

| Name of abstract Message | Type | Direction |
|---|---|---|
| MM4_delivery_report.REQ | Request | Recipient MMSC -> originator MMSC |
| MM4_delivery_report.RES | Response | Originator MMSC -> recipient MMSC |

### 3. Routing forwarding of a read-reply report

Having delivered the MM, the recipient MMSC sends the read-reply report previously submitted by the recipient MMS User Agent to the originator MMSC through routing forwarding using the MM4_read_reply_report.REQ containing only control information of MMS. The originator MMSC will respond with MM4_read_reply_report.RES providing the status information of the condition requested by MM4_read_reply_report.REQ. The definitions of the two related messages are shown in Table 4:

**Table 4**

| Name of abstract message | Type | Direction |
|---|---|---|
| MM4_read_reply_report.REQ | Request | Recipient MMSC -> originator MMSC |
| MM4_read_reply_report.RES | Response | Originator MMSC -> recipient MMSC |

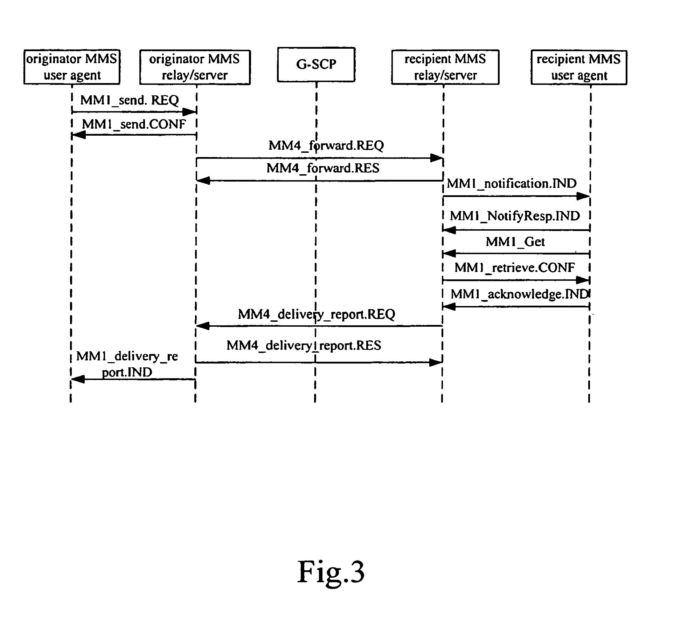

With the prior protocol framework of message transmission, forwarding a MM between different MMSCs can be implemented. The procedure of sending MM4 interface message is shown in Fig.3. The MM4_forward.REQ, MM4_forward.RES, MM4_delivery_report.REQ and MM4_delivery_report.RES are protocol messages of MM4 interface, other interface messages are supplement for the above procedure. The flow concerning about read-reply report is optional.

The document "3GPP TS 32.235 version 5.4.0 Release 5" published by the European Telecommunications Standard Institute (ETSI) discloses a method for forwarding multimedia messages between different MMSCs.

The problem existed in the prior art is that although the forwarding function of MM between different MMSCs in message transmission procedure can be realized with the prior protocol framework for message transmission on the MM4 interface, the charging function cannot be realized due to the lack of charging information required for sending related information under the condition that the MM is transferred between different MMSCs while the terminal and the Value Added Service Provider (VASP) are not located in the same MMSC.

### Summary of the Invention

An object of the invention is to provide a method for forwarding MMs between different MMSCs. With this method, the problem that corresponding charging cannot be implemented when the MMs are forwarded between different MMSCs in prior art can be resolved.

In order to achieve this object, a method for forwarding MMs between different MMSCs comprises:
a) an originator MMSC receiving a MM submitted by an originator terminal, then editing and generating a routing forward request message for identifying MM information and information relating to a VASP service application;
b) the originator MMSC sending the routing forward request message generated in step a) to a recipient MMSC;
c) the recipient MMSC returning a routing forward response message to the originator MMSC after receiving the routing forward request message; and
d) the recipient MMSC delivering the MM according to the MM information and the information relating to the VASP service application contained in the routing forward request message.

In the above-mentioned method, the information relating to the VASP service application in step a) includes: VASP service application code, serving code, service code, charging type and charging ratio.

The method may further comprise the step of the recipient MMSC implementing charging processing according to the information relating to the VASP service application in step a).

Alternatively, the method may further comprise the step of the originator MMSC implementing charging processing according to the information relating to the VASP service application in step a).

With this invention, the message structure of MM4_forward.REQ in prior art is extended and it can exactly show the current serving VASP application, the current serving service and accurate charging information using the fields representing charging information, such as VASP service application code, serving code, service code, charging type and charging ratio. Therefore, the problem that corresponding charging cannot be implemented when the MMs are forwarded between different MMSCs under the condition that the terminal and VASP application are not located in the same MMSC can be successfully resolved with this invention.

### Brief Description of the Drawings

Figure 1 is a schematic diagram illustrating system architecture of MMSC.
Figure 2 is a schematic diagram illustrating interfaces between different MMSCs.
Figure 3 is a flow chart illustrating a message transaction flow according to the MM4 interface protocol.

Figure 4 is a flow chart illustrating the flow of forwarding MM according to the present invention.

### Detailed Description of the Invention

The invention will be described in more detail with reference to drawings and an embodiment.

The method for forwarding multimedia messages applies the network environment as shown in Fig.1. As shown in Fig.1, the MMS relay/server is the so-called MMSC. First, an originator terminal submits a MM to a MMSC, the MMSC then forwards the MM to a recipient MMSC through the MM4 interface with SMTP protocol. The recipient MMSC delivers the MM to the recipient terminal and returns a delivery report to the originator MMSC to inform the delivery status.

In one embodiment of the invention, in order to realize the corresponding charging function at the same time when forwarding MMs between different MMSCs, the MM4_forward.REQ which is first generated when MM is received by a MMSC further contains five extended information elements: VASP service application code for identifying VASP service application, serving code, service code, charging type and charging ratio. These information elements provided to the recipient MMSC for using in delivering MMs contain the current serving VASP information, the current serving service information and charging information. The specific description of the extension information elements is shown in Table 5.

**Table 5**

| Information element | Presence | Description |
|---|---|---|
| VASP service application code | Conditional (mandatory if the terminal and VASP are not in the same MMSC, otherwise optional) | Identification code of a VASP service application |
| Serving code | Conditional (mandatory if the terminal and VASP are not in the same MMSC, otherwise optional) | Identification for serving of a service over current VASP application |
| Service code | Conditional (mandatory if the terminal and VASP are not in the same MMSC, otherwise optional) | Identification for a service over current VASP application |
| Charging type | Conditional (mandatory if the terminal and VASP are not in the same MMSC, otherwise optional) | Applied type of charging |
| Charging ratio | Conditional (mandatory if the terminal and VASP are not in the same MMSC, otherwise optional) | Applied ratio for charging |

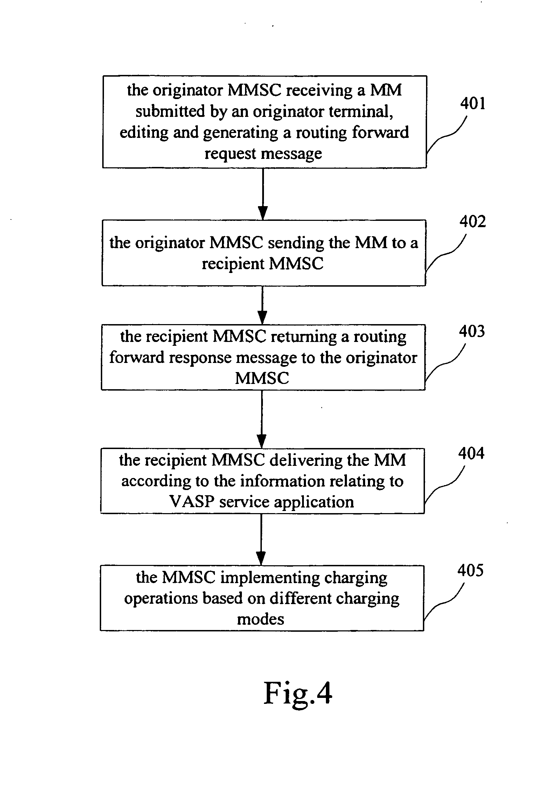

In detail, the method for implementing message forwarding and charging as shown in Fig.4 comprises the following steps.

In step 401, after having received a MM submitted by an originator terminal, the originator MMSC edits and generates a routing forward request message MM4_forward.REQ containing information of MM identity and VASP service application.

When a MM to be delivered between a terminal and a VASP is received by originator MMSC while the terminal and the VASP belong to different MMSCs, the current MM need to be forwarded. In this case, the originator MMSC forwards the MM submitted by originator terminal to the recipient MMSC with the MM4_forward.REQ message.

In step 402, the originator MMSC forwards the routing forward request message MM4_forward.REQ generated in step 401 to the recipient MMSC. Here, the request message MM4_forward.REQ contains related charging information to be used as the base of charging.

In step 403, after having received the routing forward request message MM4_forward.REQ, the recipient MMSC returns a routing forward response message MM4_forward.RES as response to the current receiving condition to the originator MMSC.

In step 404, the recipient MMSC delivers the MM according to the information of MM and VASP service application contained in the routing forward request message MM4_forward.REQ.

In step 405, the MMSCs perform charging operations according to different charging modes.

In detail, the charging operation for forwarding MMs between different MMSCs can be implemented through three modes according to the difference of the factors of service type and charger etc.

In the first mode, the charging operation is implemented by the recipient MMSC according to related information of VASP service application determined in step 401.

Having generated the message for delivering the current MM, the recipient MMSC delivers the current MM, meanwhile performs charge count for the MM based on the fields in the MM4_forward.REQ containing the information of VASP service application code, serving code, service code, charging type and charging ratio.

In the second mode, the charging operation is implemented by the originator MMSC according to related information of VASP service application determined in step 401.

Usually the communication fees and the information fees of recipient terminals are collected by the originator MMSC. Nevertheless, there are some exceptions that the fees are collected by the recipient MMSC. For example, when a recipient is required to pay for some serving messages, the collection operation of fees is implemented by the recipient MMSC.

In the third mode, the charging operation is implemented by the originator MMSC and the recipient MMSC together according to related information of VASP service application determined in step 401.

The recipient MMSC delivers the current MM according to related information of the MM contained in the received MM4_forward.REQ. Here, because the received MM4_forward.REQ contains the extension-added information of the current serving VASP, the current serving service and the charging, when constructing the message to be used for delivering the MM, the recipient MMSC extracts the information of MM and the fields of the information of VASP service application code, serving code, service code, charging type and charging ratio, and then writes them in the message to be used for delivering the MM.

Having delivered the MM, the recipient MMSC generates a corresponding delivery report according to the delivery status of the current MM and sends it to the originator MMSC, informing the current MM delivery status being successful or failure, so as to ensure the completion of the MM forwarding and the related charging by the originator MMSC. After receiving the delivery report sent by the recipient MMSC, the originator MMSC generates a new delivery report according to the status information contained in the delivery report and the requirements of the originator terminal for the delivery report, and sends it to the originator terminal, informing the delivery status of the MM submitted by the user. At the same time, the originator MMSC ends the forwarding process for the current MM, and completes the charging functionality required by the originator MMSC during forwarding MM. In this way, the charging processing for the originator terminal can be realized.

The selection of charging modes can be pre-set by the MMS service provider according to requirements or actual application conditions, or determined by the system according to the information parameters relating to charging.

With the present invention, the structure of the prior MM4_forward.REQ is extended, the current serving VASP application, the current serving service and the accurate charging information can be precisely represented by the five fields containing VASP service application code, serving code, service code, charging type and charging ratio. Therefore, the problem that charging functionality cannot be implemented when forwarding a MM between different MMSCs has been resolved successfully.

Of course, other information can also be added for implementing charging operations. The forgoing embodiment is merely exemplary and is not to be construed as limiting the present invention. The description of the present invention is intended to be illustrative, and not to limit the scope of the claims. Many alternatives, modifications, and variations will be apparent to those skilled in the art.

## Claims

1. A method for forwarding Multimedia Messages, MMs, between different Multimedia Messaging Service Centers, MMSCs, comprising:
a) (401) an originator MMSC receiving a MM submitted by an originator terminal, then generating a routing forward request message for identifying MM information;
b) (402) the originator MMSC sending the routing forward request message generated in step a) to a recipient MMSC;
c) (403) the recipient MMSC returning a routing forward response message to the originator MMSC after receiving the routing forward request message; and
d) (404) the recipient MMSC delivering the MM according to the MM information contained in the routing forward request message;
**characterized in that**
the routing forward request message generated by the originator MMSC, further contains information relating to a Value Added Service Provider service application, and the MM is delivered by the recipient MMSC further according to the information relating to the Value Added Service Provider service application.

2. The method of Claim 1, wherein said information relating to the Value Added Service Provider service application in step a) includes: Value Added Service Provider service application code, serving code, service code, charging type and charging ratio.

3. The method of Claim 1 or Claim 2, further comprising:
e1) (405) the recipient MMSC implementing charging processing according to the information relating to the Value Added Service Provider service application mentioned in step a).

4. The method of Claim 1 or Claim 2, further comprising:
e2) (405) the originator MMSC implementing charging processing according to the information relating to the Value Added Service Provider service application mentioned in step a).

## Patentansprüche

1. Verfahren zum Senden von Multimedianachrichten, MM, zwischen unterschiedlichen Multimedia-Nachrichtendienstzentren, MMSC, welches umfasst:
a) (401) ein Nachrichtenquellen-MMSC, welches eine MM empfängt, welche durch ein Nachrichtenquellen-Endgerät unterbreitet wird, wonach eine Verkehrslenkungs-Sendeanforderungs-Nachricht erzeugt wird, um die MM-Information zu identifizieren;
b) (402) wobei das Nachrichtenquellen-MMSC die Verkehrslenkungs-Sendeanforderungs-Nachricht, welche im Schritt (a) erzeugt wird, zu einem Empfänger-MMSC sendet;
c) (403) wobei das Empfänger-MMSC eine Verkehrslenkungs-Sendeantwort-Nachricht zum Nachrichtenquellen-MMSC zurückbringt, nachdem die Verkehrslenkungs-Sendeanforderungs-Nachricht empfangen wurde; und
d) (404) wobei das Empfänger-MMSC die MM gemäß der MM-Information, welche in der Verkehrslenkungs-Sendeanforderungs-Nachricht enthalten ist, liefert;
**dadurch gekennzeichnet, dass**
die Verkehrslenkungs-Sendeanforderungs-Nachricht, welche durch das Nachrichtenquellen-MMSC erzeugt wird, außerdem Information in Bezug auf eine mit einem Preis ergänzte Dienstanbieter-Dienstanwendung enthält, und die MM durch das Empfänger-MMSC weiter gemäß der Information in Bezug auf die mit einem Preis ergänzte Dienstanbieter- Dienstanwendung des Anbieters geliefert wird.

2. Verfahren nach Anspruch 1, wobei die Information bezogen auf die mit einem Preis ergänzte Dienstanbieter-Dienstanwendung im Schritt (a) aufweist: einen mit einem Preis ergänzten Dienstanbieter-Dienstanwendungscode, einen Dienstcode, einen Servicecode, eine Berechnungsart und einen Berechnungsschlüssel.

3. Verfahren nach Anspruch 1 oder 2, welches außerdem umfasst:
e1) (405) das Empfänger-MMSC, das die Berechnungsverarbeitung gemäß der Information bezogen auf die mit einem Preis ergänzte Dienstanbieter-Dienstanwendung, die im Schritt a) erwähnt wurde, realisiert.

4. Verfahren nach Anspruch 1 oder 2, welches außerdem umfasst:
e2) (405) das Nachrichtenquellen-MMSC, welches die Berechnungsverarbeitung gemäß der Information bezogen auf die mit einem Preis ergänzte Dienstanbieter-Dienstanwendung, welche im Schritt a) erwähnt wurde, realisiert.

## Revendications

1. Procédé de transmission de Messages Multimédia (MMs) entre différents Centres de Service de Messagerie Multimédia (MMCSs), comprenant:
a) un MMSC expéditeur recevant un MM soumis par un terminal expéditeur, produisant ensuite un message de demande de routage avant pour identifier les informations MM et des informations se rapportant à l'application du Service du Fournisseur de Services à Valeur Ajoutée (VASP);
b) le MMSC expéditeur transmettant le message de demande de routage avant produit à l'étape a) à un MMSC récepteur;
c) le MMSC récepteur retournant un message de réponse de routage avant au MMSC expéditeur après avoir reçu le message de demande de routage avant; et
d) le MMSC récepteur transmettant le MM selon les informations MM et les informations se rapportant à l'application du service VASP contenues dans le message de demande de routage avant.

2. Procédé selon la revendication 1, où lesdites informations se rapportant à l'application du service VASP à l'état a) comprennent: le code d'application du service VASP, le code serveur, l'indicatif d'accès, le type de facturation et le taux de facturation.

3. Procédé selon la revendication 1 ou la revendication 2, comprenant en outre:
e1) le MMSC récepteur mettant en oeuvre un traitement de facturation selon les informations se rapportant à l'application du service VASP mentionné à l'étape a).

4. Procédé selon la revendication 1 ou la revendication 2, comprenant en outre:
e2) le MMSC expéditeur mettant en oeuvre un traitement de facturation selon les informations se rapportant à l'application du service VASP mentionné à l'étape a).
